(19) **Europäisches Patentamt**
**European Patent Office**
**Office européen des brevets**

(11) **EP 1 736 901 B1**

(12) **EUROPEAN PATENT SPECIFICATION**

(45) Date of publication and mention
of the grant of the patent:
**28.12.2011 Bulletin 2011/52**

(51) Int Cl.:
**G06F 17/30** (2006.01)

(21) Application number: **06115720.2**

(22) Date of filing: **20.06.2006**

(54) **Method for classifying sub-trees in semi-structured documents**

Verfahren zur Klassifizierung von Subbäumen in halbstrukturierten Dokumenten

Procédé de classification des sous-arborescences dans des documents semi-structurés

(84) Designated Contracting States:
**DE FR GB**

(30) Priority: **20.06.2005 US 156776**

(43) Date of publication of application:
**27.12.2006 Bulletin 2006/52**

(73) Proprietor: **Xerox Corporation**
**Rochester,**
**New York 14644 (US)**

(72) Inventors:
• **Chidlovskii, Boris**
**38240, Meylan (FR)**
• **Fuselier, Jerome**
**38000, Grenoble (FR)**

(74) Representative: **Grünecker, Kinkeldey,**
**Stockmair & Schwanhäusser**
**Leopoldstrasse 4**
**80802 München (DE)**

(56) References cited:
**WO-A-01/59613** **US-A1- 2004 103 091**
**US-B1- 6 604 099**

• **ELISA BERTINO, GIOVANNA GUERRINI, ISABELLA MERLO, MARCO MESITI: "An approach to Classify Semi-Structured Objects" SPRINGER-VERLAG BERLIN HEIDELBERG, [Online] 1999, pages 416-440, XP002399223 Retrieved from the Internet: URL:http: //www.ifs.uni-linz.ac.at/~ecoop/c d/papers/ 1628/16280416.pdf#search=%22%22an %20approach%20to%20classify%20semi- structu red%20objects%22%20springer%22> [retrieved on 2006-09-18]**
• **HISASHI KASHIMA, TERUO KOYANAGI: "Kernels for Semi-Structured Data" PROCEEDINGS OF THE NINETEENTH INTERNATIONAL CONFERENCE ON MACHINE LEARNING, [Online] 2002, pages 291-298, XP002399224 San Francisco, CA, USA Retrieved from the Internet: URL:http: //www.geocities.co.jp/Technopolis /5893/publication/icml2002.pdf#search=%22% 22kernels%20for%20semi- structured%20data%2 2%22> [retrieved on 2006-09-18]**
• **MOHAMMED J. ZAKI, CHARU C. AGGARWAL: "XRules: An Effective Structural Classifier for XML Data" SIGKDD '03, [Online] 24 August 2003 (2003-08-24), - 27 August 2003 (2003-08-27) pages 316-325, XP002399225 Washington, DC, USA Retrieved from the Internet: URL:http:// citeseer.ist.psu.edu/cache/pape rs/cs/ 27765/http:zSzzSzwww.cs.rpi.eduzSz~z akizSz.zSzPSzSzSIGKDD03-xrules.pdf/zaki03x rules.pdf> [retrieved on 2006-09-18]**

EP 1 736 901 B1

**Description**

BACKGROUND

The subject development relates to structured document systems and especially to document systems wherein the documents or portions thereof can be characterized and classified for improved automated information retrieval. The development relates to a system and method for classifying semi-structured document data so that the document and its content can be more accurately categorized and stored, and thereafter better accessed upon selective demand.

By "semi-structured documents" is meant a free-form (unstructured) formatted text which has been enhanced with meta information. In the case of HTML (Hypertext Markup Language) documents that populate the World Wide Web ("WWW"), the meta information is given by the hierarchy of the HTML tags and associated attributes. The expansive network of interconnected computers through which the world accesses the WWW has provided a massive amount of data in semi-structured formats which often do not conform to any fixed schema. The document structures are essentially layout-oriented, so that the HTML tags and attributes are not always used in a consistent manner. The irregular use of tags in semi-structured documents makes their immediate use uneasy and requires additional analysis for reliable classification of the document contents with acceptable accuracy.

In legacy document systems comprising substantial databases, such as where an entity endeavors to maintain an organized library of semi-structured documents for operational, research or historical purposes, the document files often have been created over a substantial period of time and storage is primarily for the purposes of representation in a visual manner to facilitate its rendering to a human reader. There is no corresponding annotation to the document to facilitate its automated retrieval by some characterization or classification system sensitive to a recognition of the different logical and semantic constituent elements.

Accordingly, these foregoing deficiencies evidence a substantial need for somehow acquiring an improved system for logical recognition of content and semantic elements in semi-structured documents for better reactive presentations of the documents and response to retrieval, search and filtering tasks.

Prior known classification systems include applications relevant to semi-structured documents and operate similar to the processing of unstructured documents. In the case of document classification and clustering, a class name (like **HomePage, ProductDescription,** etc.) or cluster number gets associated with each document in a collection. In the case of information extraction, certain fragments of the document content are labeled with semantic labels; for example, strings like 'Xerox' and 'IBM' are labeled as **companyName,** 'Igen3' or 'WebSphere' are labeled as **ProductTitle.**

Another group of applications consists in transformation between classes of semi-structured documents. One important example is the conversion of layout-oriented HTML documents into semantic-oriented XML (Extended Markup Language) documents. The HTML documents describe how to render the document content, but carry little information on what the content is (catalogs, bills, manuals, etc.). Instead, due to its extensible tag set, the XML addresses the semantic-oriented annotation of the content (**titles, authors, references, tools,** etc.), while the rendering issues are delegated to the reuse/re-purposing component, which visualizes the content, for example on different devices. The HTML-to-XML conversion process conventionally assumes a rich target model, which is given by an XML schema definition, in the form of a Document Type Definition (DTD) or by an XML Schema; the target schema describes the user-specific elements and attributes, as well as constraints on their usage, like the element nesting or an attribute uniqueness. The problem thus consists in mapping fragments of the source HTML documents into target XML notation.

The subject development also relates to machine training of a classifying system. A wide number of machine learning techniques have also been applied to document classification. In order to classify documents according to their content, certain methods use the "bag of words" model combined with the term frequency counts. Each document d in the collection D is represented as a vector of words, where each vector component represents the occurrence of a specific word in the document. Based on the representations of documents in the training set, and using the Bayes' formula, the Naïve Bayes method evaluates the most probable class $c \in C$ for unseen documents. The main assumption made is that words are independent, thus allowing simplification in the evaluation formulas.

The representation will thus consist in defining for each document **d** a set of words (or a set of lemmas in a more general case) with an associated frequency. This is the feature vector **F(x)** whose dimension is given by the set of all encountered lemmas. By a simple sum of the feature vectors of the document belonging to the same class $c \in C$, one can compute the vector representation associated with the class in the word space in terms of lemmas frequencies. This information is used to determine the most probable class for a leaf, given a set of extracted lemmas.

Finally, a probabilistic classifier based on the Naïve Bayes assumptions tries to estimate **P(c|x),** the probability that the item **x -** the vector representation of the document **d -** belongs to the class $c \in C$. The Bayes' rule says that to achieve the highest classification accuracy, **x** should be assigned with the class that maximizes the following conditional probability:

$$c_{bayes} = \text{argmax}_{c \in C}\, P(c \mid x)$$

Bayes theorem is used to split the estimation of $P(c \mid x)$ into two parts:

$$P(c \mid x) = P(c)\, P(x \mid c)/P(x)$$

$P(x)$ is independent from the **argmax** evaluation and therefore is excluded from the computation. The classification will then consist in resolving the following:
$$c_{bayes} = \text{argmax}_{c \in C}\, P(c) \cdot P(x \mid c)$$

The prior $P(c)$ and the likelihood $P(x|c)$ are both computed in a straightforward manner, by counting the frequencies in the training set. The training step thus conveys the evaluation of all the probabilities for the different classes and for the encountered words.

To estimate a class, given a feature vector extracted for a document, one computes $P(c) \times P(x|c)$ for each class **c** in **C.** The prior $P(c)$ is a constant for the class and is already known before the evaluation step. The likelihood $P(x|c)$ is estimated using the independence assumption between words, as follows: $P(x \mid c) = \prod_{x\_i} P(x_i \mid c),$ where $x_i$ are the features in the item **x**. The unknown words are ignored because as they have not been encountered in the training set, one cannot evaluate their relevancy for a specific class.

Unfortunately, such "bag of words" classification systems have not been as accurate as desired so that there is a substantial need for more reliable classifying methods and systems.

The subject development is directed to overcoming the need for more accurate mapping of fragments of semi-structured documents such as an HTML document into a target XML notation and for better classification based upon the semantic and structured content of the document.

The classified fragments of semi-structured documents that are a subject of this application will hereinafter be regularly identified as "sub-trees". A sub-tree is defined as a document fragment, rooted at some node in the document structure hierarchy. For example, in the case of an HTML-to-XML conversion, logical fragments of the document, like paragraphs, sections or subsections, may be classified as relevant or irrelevant to the target XML document. The path representing a given sub-tree in a document has independent features such as sub-tree content, sub-tree inner paths and sub-tree outer paths. By "path" is meant the navigation from a root of the document to a leaf, i.e., the structure between the root and the leaf. The outer path comprises the content of the sub-tree fragment and the inner path is where the fragment is placed within the document and why (e.g., a table of contents is at the front, an index is at the back). The inner paths and outer paths relative to a particular sub-tree fragment are relevant in that they comprise identifiable characteristics of both the fragment and the document that can present advantageous predictive aspects of the document especially helpful to the overall classification and categorization objectives of the subject development.

In a paper entitled "An Approach to Classify Semi-Structured Objects", Springer-Verlag Berlin Heidelberg, [Online] 1999, pages 416-440, E. Bertino et al. describe a method for classifying objects based on a weak membership of an object to a class as well as conformity and heterogeneity degrees.

H. Kashima and T. Koyanagi, in a paper entitled "Kernels for Semi-Structured Data", Proceedings of the 19th International Conference on Machine Learning, [Online] 2002, pages 291-298, describe kernel methods for semi-structured data modeled by labeled ordered trees that are classified based on their tag structures.

The present development recognizes the foregoing problems and needs to provide a system and method for classifying sub-trees in semi-structured documents wherein the trees in the document are categorized not only on the basis of their yield, but also on the basis of their internal structure and their structural context in a larger tree.

BRIEF SUMMARY

A method according to claim 1 is provided for classifying/clustering document fragments, i.e., segregable portions identifiable by structural sub-trees, in semi-structured documents. In HTML-to-XML document conversion, logical fragments of the document, like paragraphs, sections or subsections, may be classified as relevant or irrelevant for identifying the document type of the target XML document so a collection of such documents can be better organized. The sub-tree comprises a set of simple paths between a root node and a leaf representing a given sub-tree. The constituent words or other items in the corresponding content for a sub-tree comprise the document content. The method comprises splitting a set of paths for the sub-tree into inner and outer paths for identifying three independent representative feature sets identifying the sub-tree: sub-tree content, sub-tree inner paths and sub-tree outer paths. The two later groups are optionally extended with nodes attributes and their values. The Naive Bayes technique is adopted to train three classifiers from annotated data, one classifier for each of the above feature sets. The outcomes of all the classifiers are then combined. Although the Naïve Bayes technique is used to exemplify the classification step, any other method assuming a vector space model, like decision trees, Support Vector Machines, k-NearestNeighbor, etc. can also be adopted for the classifying of the sub-trees in a semi-structured document.

The object of the invention is solved by the subject matter of the appended claims.

BRIEF DESCRIPTION OF THE DRAWINGS

FIGURES 1a, 1b, 1c are graphical representations of sub-trees and semi-structured documents;

FIGURES 2a, 2b, 2c identify the navigational paths in a sub-tree;

FIGURE 3 shows a tree representation where attributes are represented in the same manner as tags;

FIGURE 4 is a flowchart representing the details of the subject classifying method;,

FIGURE 5 is a flowchart representing the details of training (Naïve Bayes and Assembly) model parameters from the set of annotated documents (sub-trees); and

FIGURE 6 is a block diagram of a system implementing the subject classifying method.

DETAILED DESCRIPTION

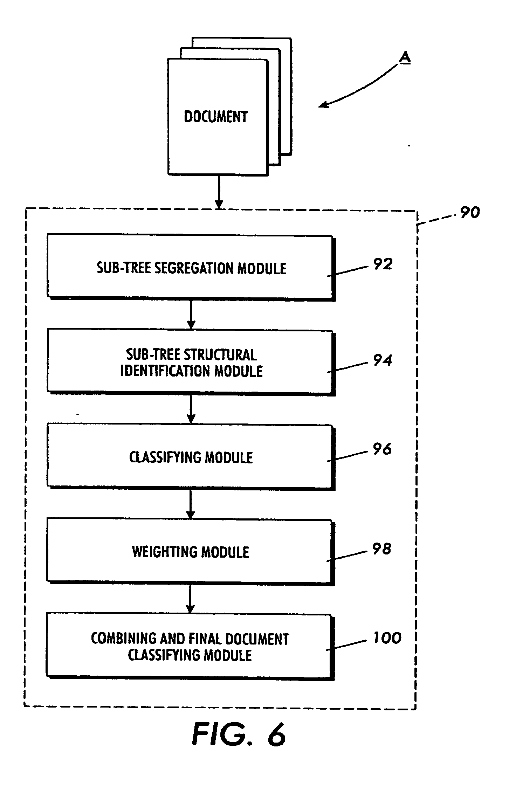

The purpose of classifying documents is so that they can be better organized and maintained. Documents A (FIGURE 6) stored electronically in a database are classified for purposes of storage in a folder in the database (not shown). Typical classifications are as technical documents, business reports, operational or training manuals, literature, etc. Automated systems for determining an accurate classification of any such document primarily relies on the nature of the document itself. The subject development is primarily applicable to semi-structured documents.

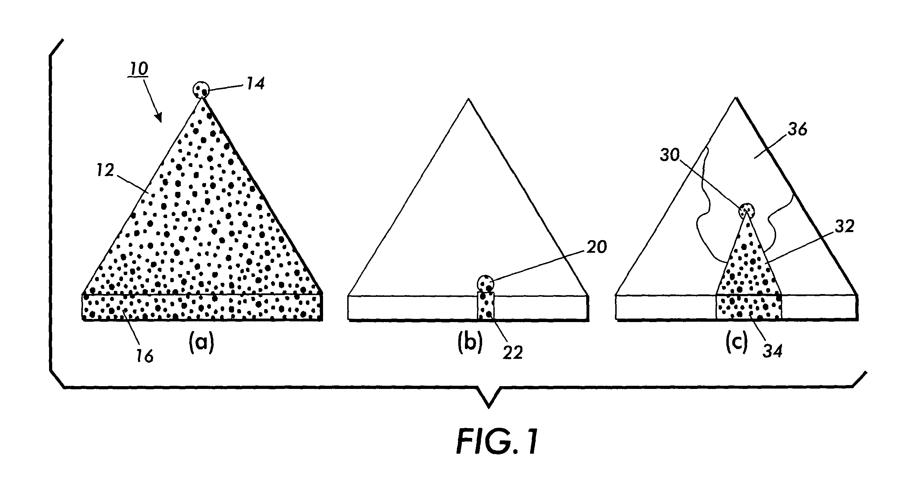

With reference to FIGURE 1a, such documents are comprised of sub-trees **10** having a document structure **12** originating from a document node **14**. The document content **16** comprises the constituent text, figures, graphs, illustrations, etc. of the semi-structured document. FIGURE 1b comprises an illustration of the simplest of sub-trees comprising a leaf sub-tree having merely a root node **20** and a leaf (a terminal node of a tree with no child) **22**. Contrasting FIGURES 1a and 1b indicates that the entire document **10** has a structure which can be used to generate one prediction for classification of the document, while extraction of a mere leaf **22** of information can generate a different classification prediction. FIGURE 1c illustrates an inner node sub-tree defined by sub-tree root **30** and having a sub-tree inner structure **32** and sub-tree content **34,** and also including a sub-tree outer structure **36.** Thus, a fragment of the whole document represented by the inner nodes sub-tree of FIGURE 1c comprises relevant information, i.e., content, an outer structure, and an inner structure, all of which are relevant to predict a classification for the inner node sub-tree itself, as well as the whole document **10.** It is an important feature of the subject invention that the relevant structural information about the sub-tree is exploited as a determinative asset in an automated classification system.

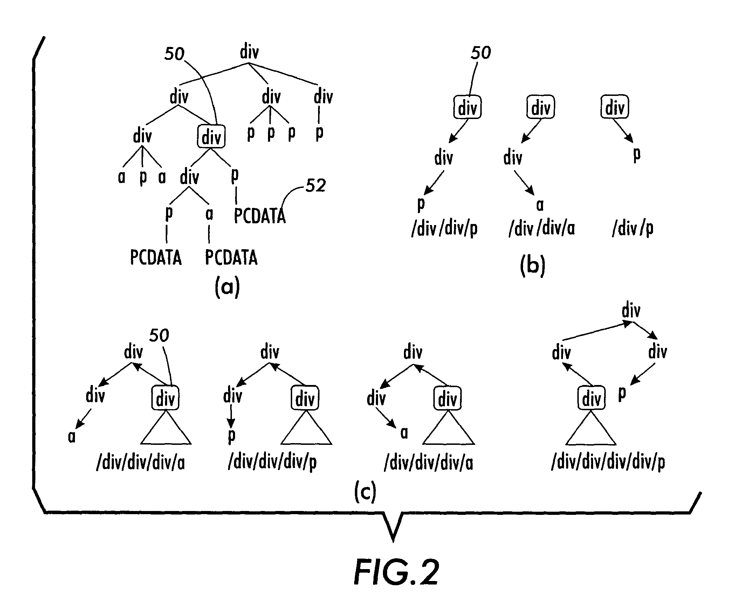

More particularly, with reference to FIGURE 2a, an inner node sub-tree originating at the div node **50** has three inner sub-tree paths detailed in FIGURE 2b. In FIGURE 2c, the same node **50** can be characterized as having a plurality of outer sub-tree paths. Thus, a sub-tree identified by one particular node **50** can be classified by distinguishing between three possible groups of features that will allow a representation of the document fragment comprising the sub-tree by its semantic and contextual content and further, will allow detection of discriminative structural patterns for the classification. The first group of features is the content of the sub-tree given by the concatenation of all the PCDATA leaves **52** of the sub-tree shown in FIGURE 2a. The second group of features comprises the structural information relevant to the sub-tree which in turn comprises two subgroups of features, the sub-tree inner path structure of FIGURE 2b, and the sub-tree exterior path information shown in FIGURE 2c. The last group of features comprises the attributes of the tags that surround the root of the sub-tree. By "tags" is meant the codes (as in HTML or XML) that give instructions for formatting or action. It can be anticipated that in some extreme cases any one of the above group of features may be small or even inexistent. For example, when the sub-tree root matches the document tree, all paths are inner; inversely, when the sub-tree is a leaf, it has a unique inner path. Each of these three groups can be reduced to the Naïve Bayes probabilistic classifier method so that the subject classification problem can be reduced to a vector space model.

Concerning dealing with the content **52** of the sub-tree with Naïve Bayes methodology, the content of the PCDATA leaves **52** belonging to the sub-tree of FIGURE 2a are lemmatized and are then conventionally used in a "bag of words" model, assuming the lemma independency. Once the model is defined, the subject classification method will try to determine which lemmas are representative of any specific class **c**. The classification will thus try to find the class that is the more probable for a given sub-tree with the lemmas retrieved using the leaves of the sub-tree.

More importantly, the subject method concerns the application of Naïve Bayes methodology to the identifiable structures of the semi-structured documents. Those structural features which globally represent a particular sub-tree within the whole document can be used to capture the global position of the sub-tree in the semi-structured document. Such global information is identified as the outer sub-tree features shown in FIGURE 2c. The subject method symmetrically deals with the inner sub-tree features of FIGURE 2b. The outer sub-tree features and the inner sub-tree features represent two different sources of information that can be used to characterize a sub-tree, thereby opposing global information to local information. As can be readily appreciated, the method used to extract the information is similar for both of them.

The major idea of this development is in establishing an analogy between paths in a sub-tree and words in a document. A path in a tree, starting at any inner node being the root of a sub-tree, is given by the sequence of father-to-son and son-to-father relations between nodes, implied by the tree structure of the document. For the sub-tree root and for a given depth limiting the length of retrieved paths, one may retrieve a set of paths mapping the structure "surrounding" the sub-tree root into a set of words that will be then used in the bag of words model of the Naïve Bayes method. The difference between inner sub-tree features and outer sub-tree features is just the starting directions for the paths. Extracting outer paths assume the first upward step from the root: retrieving inner paths instead assumes the first downward step. Although the outer and inner paths are extracted with the same method, they induce different semantic information and do not have to be used together. It is preferable to create two separate methods that are merged afterwards.

In FIGURE 2, for the sub-tree rooted at the **div** node **(50),** one is able to extract structure information, represented with simple XPath expressions. These features will be considered as words for the Naïve Bayes method and the set of all retrieved paths will define the vocabulary for the learning set of nodes. Given the bag of words approach of the Naïve Bayes method, one can analogize the "bag of paths" model for the subject method. In this specific approach, the feature vector for a sub-tree to be classified is given by frequencies of the retrieved paths from the tree, for both inner sub-tree and outer sub-tree paths. The Naïve Bayes evaluation of the conditional probability **P(x|w)** remains the same as one assumes the independency between different paths. The only difference is that the paths of the same length are extracted, in order to guarantee that no path is a prefix of another path in the "bag of paths" representation. In the case of inner paths, the length of paths is the sub-tree height. In the case of outer paths, the path length is fixed to some value.

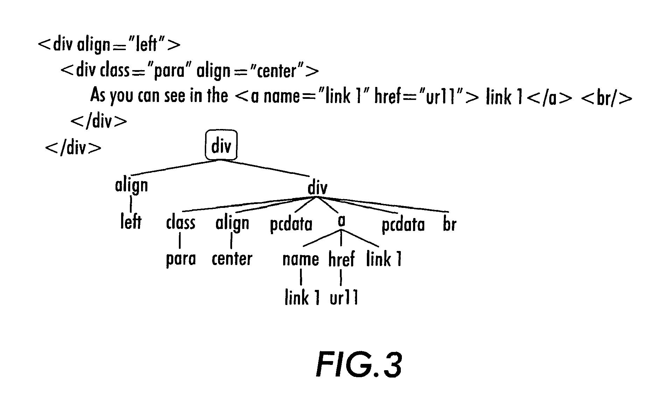

The third group of features which can be exploited for classifying information are the node attributes. As noted above, in semi-structured documents, the document structure is given by both tags and attributes. Moreover, in certain cases the attributes can carry rich and relevant information. As an example, in the framework of legacy document conversion, the majority of existing PDF-TO-HTML converters use attributes to store various pieces of layout information that can be useful for learning classification rules. The subject development thus extends a sub-tree characterization in order to deal with the attributes and their values. By analogy with the Document Object Model (DOM) parsing of XML and XHTML documents that consider tags and attributes as specialization of a common type **Node,** the attributes and their values are considered in a similar way as tags so that a path extraction procedure can be accordingly adopted. With reference to FIGURE 3, an HTML sub-tree and its DOM-like tree representation is exemplified. The attributes are represented in the same manner as tags (attribute values are not interpreted specifically and taken as strings). Unlike tags that can appear at any position in a path, the attributes and their values can only terminate an inner/outer path.

Three different methods have thus been defined for predicting a class for a sub-tree in a semi-structured document and evaluating the associated likelihood based on Naive Bayes method: the three classifiers use the disjoint group features, defined by the sub-tree content, inner paths, outer paths, possibly extended with attributes and their values. It is important to note that mixing up features from different groups may be confusing. Indeed, as features from the different groups, like inner and outer paths, bring the opposite evidence, it is preferable to train classifiers for all feature groups separately and the combining their estimations using one of an assembly technique, like the majority voting, etc. which is a straightforward method for increasing the prediction accuracy [see Thomas G. Dietterich, "Ensemble methods in machine leaning", Multiple Classifier Systems, pp. 1-15, 2000].

In the worst case, the estimated most probable classes are all different. However, it is preferable to only target a global estimation, which the system considers the most probable, given the results returned by each method. One important point is that all the methods are independent as they work on different features. They do not share information when they estimate the probabilities for the different classes. In this specific case, the final estimations may be computed by multiplying, for each class, the probability of the class for each method. Then, the class selected by the global estimation is most likely.

To handle this problem, a Maximum Entropy approach is used to combine the results of the different classifiers. Numerical features that correspond to the estimations for each class and each method are used. The following tables show in a simple example where predictions made by three methods on three classes are used as input features for a Maximum Entropy package. A training phase produces the assembly Maximum Entropy model for combining the three methods on unseen observations.

|  | method1 | method2 | method3 |
|---|---|---|---|
| Class 1 | 0.8 | 0.33 | 0.5 |
| Class 2 | 0.1 | 0.33 | 0.4 |
| Class 3 | 0.1 | 0.33 | 0.1 |

| Maxent features | m1_c1 | m1_c2 | m1_c3 | m2_c1 | m2_c2 | m2_c3 | m2_c1 | m2_c2 | m2_c3 |
|---|---|---|---|---|---|---|---|---|---|
| value | 0.8 | 0.1 | 0.1 | 0.33 | 0.33 | 0.33 | 0.5 | 0.4 | 0.1 |

Formally, assume we have at our disposal a number of classification methods $M_i$, i = 1....m, including the three methods $M_1$, $M_2$, $M_3$ described in the previous section. For any observations x, let $p_{ij}(x)$ denote the likelihood of class $C_j$ predicted by method $M_i$. The assembly method uses weighted sums $\Sigma_i \alpha_{ij} p_{ij}(x)$ for all classes $c_j$ in C, where $\alpha_{ij}$ is a weighted factor for the prediction of $c_j$ by method $M_i$ in order to select the class $c_{ass}$ that maximizes the sum:

$$c_{ass} = \text{argmax}_{cj} \sum_i \alpha_{ij} p_{ij}(x)$$

To learn weights $\alpha_{ij}$ from available training data, we use the dual form of the maximum entropy principle that estimates the conditional probability distribution

$$P\alpha(c_j \mid x) = 1/Z \exp\left(\sum_i \alpha_{ij} f_{ij}(x)\right)$$

where $f_{ij}$ is a feature induced by the likelihood prediction $p_{ij}$ and Z is a normalization factor to sum all probabilities to 1. Then the assembler decision is the class that maximizes the conditional probability $P\alpha(c_j \mid x)$ on the observation **x:**

$$c_{ass} = \text{argmax } c_j P\alpha(c_j \mid x)$$

It is also possible to annotate certain classifications that have a high probability of accuracy. Such assigned annotations can be developed from empirical data derived over the training time period of the subject program.

With this approach, given a context for a leaf defined by the different results of each classifier, more robust estimations are produced.

The specific embodiments discussed above are merely illustrative of certain applications of the principals of the subject development.

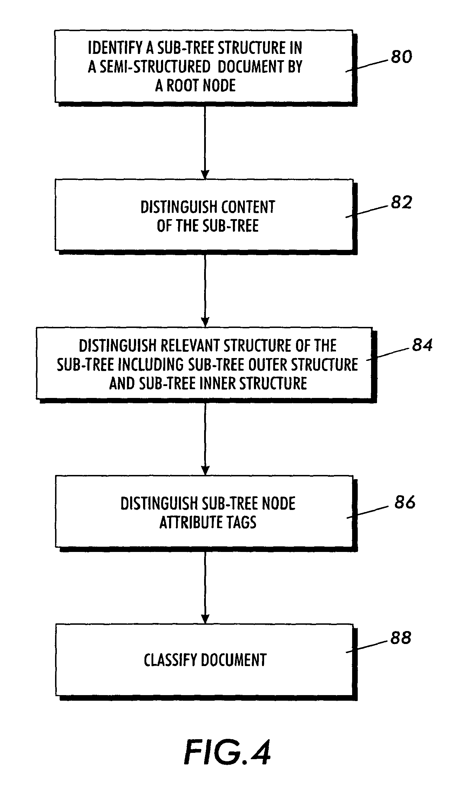

With reference to FIGURE 4, the method of the subject development can be summarized as a series of steps. First the sub-tree must be identified **80** by a root node. The contextual content of the document fragment defined by the root node is distinguished **82**. The outer tree and inner tree structures are also distinguished **84** as is the node tags and attributes **86.** Such characterizing information for the sub-tree can then be used in a probabilistic classifier to classify **88** the sub-tree or the document as a whole.

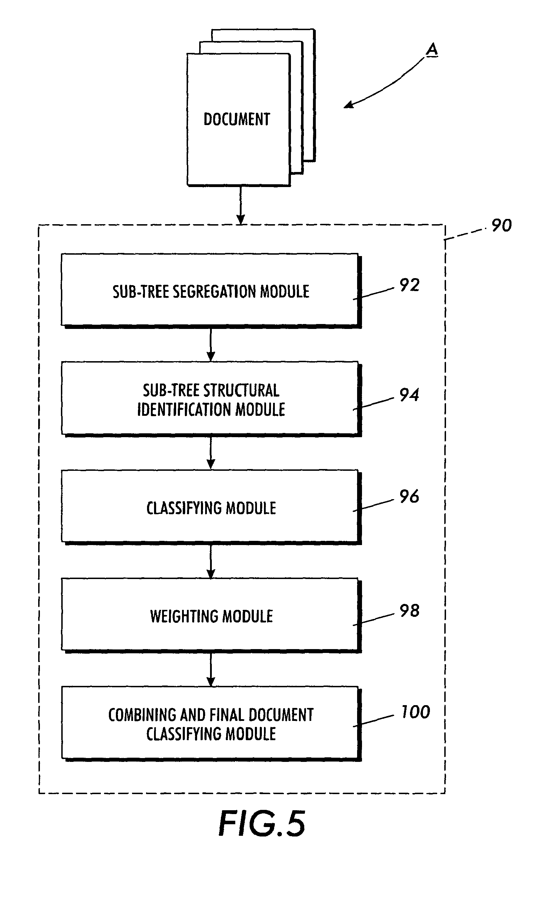

With reference to FIGURE 5, a flowchart represents the details of training (Naïve-Bayes and Assembly) model parameters from the set of annotated documents (sub-trees). For each sub-tree **120** in the annotated corpus comprising a training set three different items are distinguished. The content **122** of the sub-trees is distinguished; the outer structure **124** of the sub-tree is distinguished; and the inner structure **126** of the sub-tree is distinguished. These features are then respectively utilized to train the Naïve-Bayes parameters that are associated with the content model **128,** the outer model **130** and the inner model **132**. Such parameters are then weighted in accordance with the assembly (weighting) method **134** discussed above.

With reference to FIGURE 6, a block diagram of a system implementing the method step described above is illustrated. A classifying module **90** is implemented in the computer system (not shown) that includes a sub-tree segregating module **92** which segregates a fragment of the document from the whole document. The structural identification of the sub-tree is identified with identification module **94** and the data therefrom is directed to classifying module **96** for generating a probabilistic classifier value for each of the groups of structural information identified in module **94**. The classifying values are then selectively weighted by weighting module **98** and then all the values can be combined to generate a final document probabilistic classification value with combining and classifying module **100**.

**Claims**

1.  A method of classifying a semi-structured document (10), comprising:

    identifying the document (10) to include a plurality of document fragments, wherein at least a portion of the fragments include a recognizable structure corresponding to fragment content (16);
    recognizing selected ones of the fragments to comprise pre-determined content and structure; and
    classifying the document (10) as a particular type of document (10) in accordance with the recognizing;
    wherein the recognizing the pre-determined structure comprises identifying a relative position of the fragment within the document (10).

2.  The method of claim 1 including recognizing semantic content of the fragment within the document (10) as the pre-determined content.

3.  The method of claim 2 wherein recognizing the semantic content of the fragment comprises forming a concatenation of content components of the fragment.

4.  The method of claim 1 including recognizing a structural element of the fragment as the pre-determined structure.

**Patentansprüche**

1.  Ein Verfahren zum Klassifizieren eines semi-strukturierten Dokuments (10), das umfasst:

    Identifizieren des Dokuments (10), das eine Mehrzahl an Dokumentfragmenten enthält, wobei zumindest ein Teil der Fragmente eine erkennbare Struktur entsprechend einem Fragmentinhalt (16) enthält;
    Erkennen von ausgewählten Fragmenten aus den Fragmenten, die einen vorbestimmten Inhalt und eine vorbestimmte Struktur umfassen; und
    Klassifizieren des Dokuments (10) als eine bestimmte Art eines Dokuments (10) in Übereinstimmung mit dem Erkennen;
    wobei das Erkennen der vorbestimmten Struktur das Identifizieren einer relativen Position des Fragments innerhalb des Dokuments (10) umfasst.

2.  Das Verfahren von Anspruch 1, das das Erkennen eines semantischen Inhalts des Fragments innerhalb des Dokuments (10) als den vorbestimmten Inhalt umfasst.

3.  Das Verfahren von Anspruch 2, in dem das Erkennen des semantischen Inhalts des Fragments das Bilden einer Konkatenation von Inhaltskomponenten des Fragments umfasst.

4.  Das Verfahren von Anspruch 1, das das Erkennen eines strukturellen Elements des Fragments als die vorbestimmte Struktur einschließt.

**Revendications**

1.  Procédé de classification d'un document semi-structuré (10), comprenant le fait :

    d'identifier que le document (10) inclut une pluralité de fragments du document, dans lequel au moins une partie des fragments inclut une structure reconnaissable correspondant à un contenu de fragment (16) ;
    de reconnaître que certains fragments sélectionnés présentent un contenu et une structure prédéterminés ; et
    de classer le document (10) comme étant un type particulier de document (10) conformément à la reconnaissance ;

où la reconnaissance de la structure prédéterminée comprend le fait d'identifier une position relative du fragment dans le document (10).

2. Procédé de la revendication 1 comportant le fait de reconnaître qu'un contenu sémantique du fragment dans le document (10) est le contenu prédéterminé.

3. Procédé de la revendication 2 dans lequel le fait de reconnaître le contenu sémantique du fragment comprend la formation d'une concaténation de composants de contenu du fragment.

4. Procédé de la revendication 1 comportant le fait de reconnaître qu'un élément structurel du fragment est la structure prédéterminée.

FIG.1

EP 1 736 901 B1

50

div

div          div        div

div      div        p  p  p    p

a  p  a    div      p

p      a      PCDATA        52

PCDATA    PCDATA

**(a)**

50

div        div        div

div        div        p

p          a      /div/p

/div/div/p    /div/div/a

**(b)**

50

div            div            div            div

div      div      div    div      div  div      div  div

a            p            a      div      p

/div/div/div/a    /div/div/div/p    /div/div/div/a    /div/div/div/div/p

**(c)**

# FIG.2

<div align="left">
   <div class="para" align="center">
      As you can see in the <a name="link 1" href="url1"> link 1 </a> <br/>
    </div>
  </div>

FIG.3

IDENTIFY A SUB-TREE STRUCTURE IN
A SEMI-STRUCTURED DOCUMENT BY
A ROOT NODE — 80

DISTINGUISH CONTENT
OF THE SUB-TREE — 82

DISTINGUISH RELEVANT STRUCTURE OF THE
SUB-TREE INCLUDING SUB-TREE OUTER STRUCTURE
AND SUB-TREE INNER STRUCTURE — 84

DISTINGUISH SUB-TREE NODE
ATTRIBUTE TAGS — 86

CLASSIFY DOCUMENT — 88

FIG.4

DOCUMENT

_A_

90

SUB-TREE SEGREGATION MODULE — 92

SUB-TREE STRUCTURAL IDENTIFICATION MODULE — 94

CLASSIFYING MODULE — 96

WEIGHTING MODULE — 98

COMBINING AND FINAL DOCUMENT CLASSIFYING MODULE — 100

## FIG.5

DOCUMENT

A

90

SUB-TREE SEGREGATION MODULE — 92

SUB-TREE STRUCTURAL IDENTIFICATION MODULE — 94

CLASSIFYING MODULE — 96

WEIGHTING MODULE — 98

COMBINING AND FINAL DOCUMENT CLASSIFYING MODULE — 100

FIG. 6